# EUROPÄISCHE PATENTSCHRIFT

(11) **EP 2 668 714 B1**
(45) Veröffentlichungstag und Bekanntmachung des Hinweises auf die Patenterteilung: **02.11.2016**
(21) Anmeldenummer: 12706534.0
(22) Anmeldetag: 22.02.2012
(51) Int. Cl.: H02K 55/04, H02K 9/20

(54) **SUPRALEITENDE SYNCHRONMASCHINE, UMFASSEND EINEN GEGEN EINEN STATOR ROTIERBAREN ROTOR MIT WENIGSTENS EINER SUPRALEITENDEN WICKLUNG**
SUPER CONDUCTING SYNCHRONOUS MACHINE COMPRISING A ROTOR WHICH CAN ROTATE IN RELATION TO A STATOR AND WHICH HAS AT LEAST ONE SUPER CONDUCTING WINDING
MACHINE SYNCHRONE SUPRACONDUCTRICE ÉQUIPÉE D'UN ROTOR POUVANT TOURNER PAR RAPPORT À UN STATOR ET PRÉSENTANT AU MOINS UN ENROULEMENT SUPRACONDUCTEUR

(30) Priorität: 04.03.2011 DE 102011005091
(43) Veröffentlichungstag der Anmeldung: 04.12.2013
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2012/053007
(87) Internationale Veröffentlichungsnummer: WO 2012/119858

(56) Entgegenhaltungen:
- JP-A- S5 728 540
- JP-A- S5 910 153
- JP-A- S6 194 558
- JP-A- S60 176 462
- US-B2- 6 657 333

## Beschreibung

Supraleitende Synchronmaschine, umfassend einen gegen einen Stator rotierbaren Rotor mit wenigstens einer supraleitenden Wicklung

Die Erfindung betrifft eine supraleitende Synchronmaschine, umfassend einen gegen einen Stator rotierbaren Rotor mit wenigstens einer supraleitenden Wicklung, die über eine Kühleinrichtung gekühlt wird, wobei die gekühlten Bereiche des Rotors wenigstens teilweise durch einen mit dem Rotor rotierenden Vakuumraum umgeben sind.

Supraleitende Synchronmaschinen, also Synchronmaschinen, die wenigstens eine supraleitende Wicklung aufweisen, sind im Stand der Technik bereits grundsätzlich bekannt. Eine solche Maschine ist zum Beispiel in der US 6,657,333 B2 beschrieben.

Dabei kann die supraleitende Wicklung eine Rotorwicklung sein, die über eine Kühleinrichtung gekühlt werden muss, um die Betriebstemperatur zu halten. Beispielsweise ist es bekannt, den Rotor mit einem hohlen Innenraum zu versehen, in dem ein in diesen Innenraum eingeleitetes Kühlmedium an einem wärmeleitenden Wicklungsträger verdampft, um die Wicklungen zu kühlen. Der Innenraum wirkt also als Verdampferraum.

Um die gekühlten Bereiche des Rotors zu isolieren, ist das "Kaltteil" üblicherweise von einem Isoliervakuum umgeben, das bedeutet, es ist ein mit dem Rotor rotierender Vakuumraum als Teil des Rotors vorgesehen. Dabei wurde vorgeschlagen, bei der Montage des Rotors den späteren Vakuumraum auszupumpen und zu verschließen, um ein statisches Vakuum zu erzeugen.

In der Praxis jedoch ist ein absolutes statisches Vakuum nur sehr schwer zu erreichen. Bedingt durch Leckraten im Bereich von Flanschverbindungen, Schweißnähten und teilweise in den eingesetzten Komponenten selbst muss davon ausgegangen werden, dass Gase aus dem Außenraum in mehr oder weniger geringem Umfang während der Betriebsdauer der Synchronmaschine in den Vakuumraum eindringen können.

Hier sind im Stand der Technik mehrere Verbesserungsansätze bekannt. Zum einen wurde vorgeschlagen, durch den Einsatz sogenannter Kryopumpen eindringendes Gas auszufrieren und so das Vakuum aufrechtzuerhalten. Bei hinreichend kleinen Leckagen ist dieses Verfahren sehr erfolgreich und gewährleistet den Betrieb der Maschine auch über lange Zeiträume. Falls allerdings die Kryopumpe zusammen mit der Synchronmaschine aufgewärmt wird, dampft auch das ausgefrorene Gas wieder ab und zerstört das Isoliervakuum. Eine erneute Abkühlung ist dann nur mit Nachevakuieren des eingebauten Rotors möglich. Für Gase, die bei der Betriebstemperatur des Rotorkaltteiles nicht ausgefroren werden können, beispielsweise Wasserstoff, Helium oder Neon, müssen andere Wege beschritten werden. Für Wasserstoff wurde beispielsweise der Einsatz sogenannter Gettermaterialien vorgeschlagen, die die Gase per Adsorption, Absorption oder chemisch binden.

Weiterhin wurde vorgeschlagen, auf die Verwendung eines statischen Vakuums zu verzichten und am rotierenden Vakuumraum permanent zu pumpen, indem eine am Rotor angeflanschte Pumpe mit dem Rotor mitrotiert. Insbesondere bei hohen Drehzahlen ist diese Lösung jedoch letztlich nicht realisierbar, nachdem die auf die Pumpe wirkenden Zentrifugalkräfte bei bestehenden Pumpenbauarten zu groß werden.

Der Erfindung liegt daher die Aufgabe zugrunde, eine Synchronmaschine derart auszugestalten, dass ein in einem Vakuumraum des Rotors vorliegendes Isoliervakuum verlässlich aufrechterhalten werden kann.

Die Lösung dieser Aufgabe erfolgt erfindungsgemäß mit einer Synchronmaschine nach Anspruch 1. Dabei ist vorgesehen, dass in einem mittels wenigstens zweier Drehdichtungen erzeugten, relativ zum Rotor feststehenden und den Vakuumraum begrenzenden Anschlussbereich eine den Vakuumraum mit einer Vakuumpumpe verbindende Pumpleitung vorgesehen ist.

Erfindungsgemäß wird also vorgeschlagen, Drehdichtungen, wobei besonders bevorzugt Ferrofluiddichtungen verwendet werden, einzusetzen, um einen feststehenden Anschlussbereich als Teil des Vakuumraums zu realisieren, so dass dort beispielsweise ein feststehendes Gasrohr, die Pumpleitung, angeschlossen werden kann. Somit wird eine feststehende Verbindung zu einer feststehenden Pumpe geschaffen, die mithin nicht mit dem Rotor selbst rotieren muss.

Es ist also weiterhin vorgesehen, dass der rotierende Vakuumraum vom Außenraum und dem Rest des Rotors, insbesondere einem im Rotor vorliegenden Kühlmediumraum, beispielsweise durch Flanschverbindungen und Kryostatwände, getrennt ist. Ferner ist jedoch zum Außenraum hin auch eine Trennung durch eine Drehdichtung gegeben, wobei zwei den Anschlussbereich umschließende Drehdichtungen verwendet werden. Auf diese Weise ist der Vakuumraum weiterhin abgedichtet, es wird jedoch ermöglicht, den rotierenden Vakuumraum über eine feststehende Pumpleitung anzuschließen.

Der bislang beispielsweise durch Kryostatwände und Flanschverbindungen von den übrigen Räumen getrennte Vakuumraum des rotierenden Isoliervakuums wird also topologisch dahingehend modifiziert, dass er eine feststehende, nicht mit dem Rotor rotierende Begrenzung aufweist, in der eine Pumpleitung zu einer ortsfesten Pumpe untergebracht werden kann. Auf diese Weise ist es also möglich, auch während des Betriebs die Pumpe zu betreiben und somit die Aufrechterhaltung des Vakuums sicherzustellen. Dabei kann sowohl vorgesehen sein, dass die Vakuumpumpe kontinuierlich betrieben wird, es ist jedoch auch denkbar, lediglich einen beispielsweise gesteuerten, zeitweisen Betrieb vorzusehen, wenn eine hinreichende Dichtigkeit gegeben ist.

Durch die erfindungsgemäße Verwendung von gezielt eingesetzten Drehdichtungen wird also erstmals ein verlässliches Konzept zur einfachen und jederzeit möglichen Evakuierung des Vakuumraums geschaffen.

Erfindungsgemäß ist vorgesehen, dass als Teil der Kühleinrichtung ein feststehender Leitungsabschnitt für ein Kühlmedium in den Rotor hineingeführt ist, welcher feststehende Leitungsabschnitt von einem eine zylindrische Außenwand aufweisenden Bauteil, insbesondere einem Kühlrüssel, umgeben ist, wobei die axial aufeinander folgenden Drehdichtungen derart angeordnet sind, dass ein Teil der feststehenden Außenwand und/oder ein feststehender Anteil einer die beiden Drehdichtungen umfassenden Baueinheit eine Begrenzung des Vakuumraums bildet. Kühleinrichtungen, die ein zu nutzendes Kühlmedium aus einem feststehenden Teil der Kühleinrichtung in den Rotor zuführen, sind im Stand der Technik bereits grundsätzlich bekannt. Beispielsweise sind Ausgestaltungen denkbar, in denen eine einen Innenraum des Rotors als Verdampferraum nutzende Kühleinrichtung vorgesehen ist. Dann kann der Leitungsabschnitt beispielsweise als ein Rohr in diesen Innenraum hineinragen, so dass flüssiges Kühlmedium von ihm auf die beispielsweise durch die Wicklungsträger gebildete Wandung des Innenraums abtropft. Bei einer derartigen oder ähnlichen Ausgestaltung ist es nun üblich, ohnehin eine Drehdurchführung/Drehdichtung zu verwenden, um das den Leitungsabschnitt umfassende feststehende Bauteil in den Rotor hineinzuverbinden. Erfindungsgemäß kann nun in dieser ersten Ausgestaltung vorgesehen sein, die ohnehin schon vorhandene Drehdichtung durch eine weitere Drehdichtung zu ergänzen, die die Verbindung des Vakuumraums mit einem feststehenden Pumpleitungsstück ermöglicht. Beispielsweise ist es also denkbar, dass die zum Rotor hin gelegene Drehdichtung den Vakuumraum gegen den beispielsweise als Kühlmediumraum genutzten Innenraum des Rotors abdichtet, während gleichzeitig durch die vom Mittelpunkt des Rotors weggelegene Drehdichtung der Vakuumraum gegen den Außenraum abgedichtet wird. Dabei sind nun zwei Möglichkeiten denkbar.
Zum einen kann die Außenwand des Bauteils, insbesondere des Kühlrüssels, selber eine Begrenzung des Vakuumraums bilden, an die beispielsweise als Öffnung oder nach Art eines Stutzens die Pumpleitung anschließt. Dabei ist es also möglich, dass die Pumpleitung durch das Bauteil geführt wird. Beispielsweise kann das Bauteil der Außenwand benachbart einen eigenen Vakuumbereich, der dem Leitungsabschnitt zugeordnet ist, aufweisen, durch den die Pumpleitung geführt werden kann.
Erfindungsgemäß wird es jedoch bevorzugt, wenn die Pumpleitung durch eine Drehdichtung geführt ist. Besteht die Drehdichtung also aus zwei gegeneinander drehbaren Hohlzylindern, wobei der Spalt zwischen den Hohlzylindern entsprechend, beispielsweise durch ein Ferrofluid, abgedichtet ist, so kann die Pumpleitung beispielsweise durch den feststehenden Hohlzylinder geführt werden. Es ist dann also nur eine Modifikation der Drehdichtung erforderlich.
Besonders zweckmäßig ist es, wenn die beiden Drehdichtungen als eine einzige Baueinheit realisiert sind. Beispielsweise kann ein Hohlzylinder, der den feststehenden Teil beider Drehdichtungen bildet, zwei weiteren Hohlzylindern gegenüberliegen, die voneinander beabstandet die beiden Drehdichtungen bilden. Der beide Drehdichtungen überspannende Anteil der Baueinheit bildet dann letztlich eine Begrenzung des Vakuumraums, mithin den Anschlussbereich. Dann ist es besonders bevorzugt, wenn die Ableitung durch die Baueinheit geführt ist. Das bedeutet, die Drehdurchführungen/Drehdichtungen sind dann in einer gemeinsamen Baueinheit mit integrierter Pumpleitung kombiniert, so dass die Pumpleitung beispielsweise durch den feststehenden, beide Drehdichtungen übergreifenden Hohlzylinder, mithin stückweise also auch durch eine Drehdichtung, geführt werden kann.

Besonders vorteilhaft lässt sich die vorliegende Erfindung einsetzen, wenn der Rotor von einem zur Kühlung des Stators vorgesehenen Wasserstoffgas umgeben ist. Dies kann beispielsweise bei Großgeneratoren der Fall sein. Das zur Ständerkühlung erforderliche Wasserstoffgas resultiert in einer für den Vakuumraum des Rotors besonders kritischen Situation, da ein erhöhter Außendruck gegeben ist (einige Bar), der Wasserstoff hoch diffus ist und der Siedepunkt von Wasserstoff sehr niedrig ist. Nachdem bei solchen Großgeneratoren lange Betriebszeiten gefordert werden, bietet die erfindungsgemäße Ausgestaltung eine besonders vorteilhafte und zweckmäßige Möglichkeit, durch kontinuierliches Abpumpen eindringenden Wasserstoffs das Vakuum aufrechtzuerhalten.
Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: relevante Komponenten einer erfindungsgemäßen Synchronmaschine einer ersten Ausführungsform,
- Fig. 2: relevante Komponenten einer erfindungsgemäßen Synchronmaschine in einer zweiten Ausführungsform,

- Fig. 3: 7 relevante Komponenten einer erfindungsgemäßen Synchronmaschine in einer dritten Ausführungsform, und
- Fig. 4: relevante Komponenten einer beispielhaften Synchronmaschine

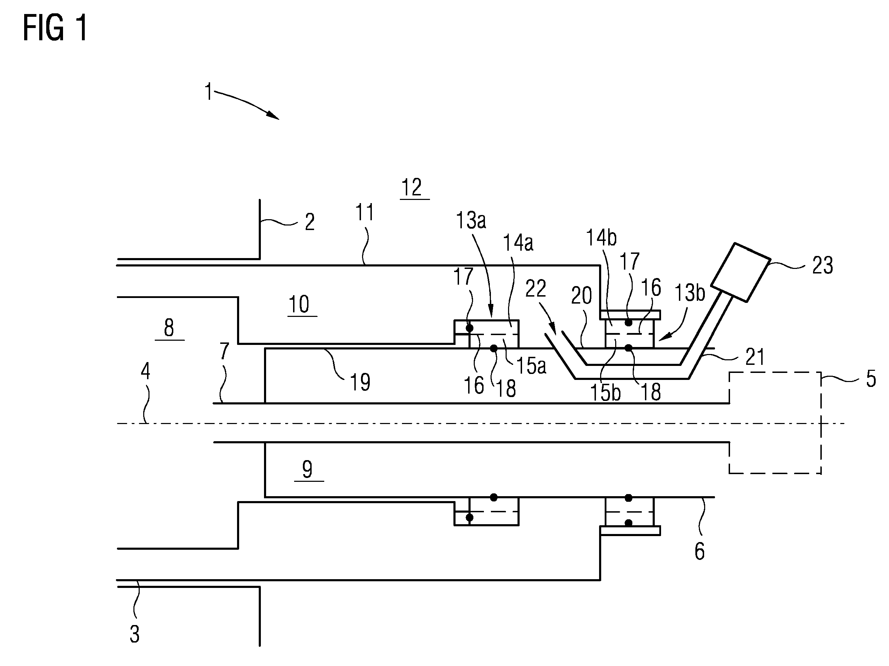

Fig. 1 zeigt eine Prinzipskizze relevanter Komponenten und Bereiche einer erfindungsgemäßen supraleitenden Synchronmaschine 1. Sie umfasst einen gegen einen Stator 2 mit nicht näher gezeigten Statorwicklungen rotierbaren Rotor 3, in dem hier nicht näher gezeigte supraleitende Wicklungen vorgesehen sind. Der Rotor ist dabei um eine Drehachse 4 drehbar.
Um die supraleitenden Wicklungen auf ihrer Betriebstemperatur zu halten, umfasst die Synchronmaschine 1 ferner eine bei 5 angedeutete Kühleinrichtung, die über einen in ein Bauteil 6 integrierten Leitungsabschnitt 7, der relativ zum Rotor 3 feststehend ist, ein flüssiges Kühlmedium in einen hohlen Innenraum 8 des Rotors 3 leitet, wo es unter Kühlung der Wicklungen verdampft und durch einen anderen Bereich des Leitungsabschnitts 7 wieder einem Kondensor der Kühleinrichtung 5 zugeführt wird. Zum Transport des Kühlmediums wird beispielsweise der Thermosiphon-Effekt ausgenutzt, und der Innenraum 8 wirkt als Verdampferraum.
Wie zur Isolierung des Leitungsabschnitts in dem Bauteil 6 ein isolierender Vakuumbereich 9 vorgesehen ist, sind auch die gekühlten Bereiche des Rotors 3 von einem Vakuumraum 10 umgeben. Der Vakuumraum 10 wird durch Kryostatwände 11 und Flanschverbindungen vom Innenraum 8 und dem Außenraum 12 abgetrennt, wobei der Außenraum 12 beispielsweise zur Kühlung des Stators 2, konkret der Statorwicklungen, mit Wasserstoffgas gefüllt sein kann.
Um nun eine kontinuierliche oder bei montiertem Rotor 3 überhaupt noch mögliche Evakuierung des Vakuumraums 10 zu ermöglichen, weist dieser eine gegenüber dem Stand der Technik veränderte Topologie auf. So sind zwei Drehdichtungen 13a, 13b (oft auch Drehdurchführungen genannt) vorgesehen, die als Ferrofluiddichtungen ausgebildet sind. Sie umfassen zwei gegeneinander drehbare Hohlzylinder 14a, 14b, 15a, 15b, die gegeneinander durch ein hier nur angedeutetes Ferrofluid 16 abgedichtet sind. Die Hohlzylinder 14a, 14b, 15a, 15b rotieren dabei mit dem Rotor 3 und sind über einen Dichtungsring 17 mit diesem verbunden. Die Hohlzylinder 15a, 15b sind über Dichtungsringe 18 mit dem Bauteil 6, konkret dessen Außenwand 19, verbunden.

So dichtet die Drehdichtung 13a vorliegend den Innenraum 8 gegen den Vakuumraum 10 ab, während die Drehdichtung 13b den Vakuumraum 10 gegenüber dem Außenraum 12 abdichtet. Damit ist eine Anordnung gegeben, in der ein Abschnitt 20 der Außenwand 19 des Bauteils 6 eine Begrenzung des Vakuumraums 10 bildet, die allerdings nicht mitrotiert, sondern feststeht. Dies ermöglicht es, eine durch das Bauteil 6, konkret den Vakuumbereich 9, geführte Pumpleitung 21 in dem gebildeten Anschlussbereich 22 an den Vakuumraum anzuschließen. Die Pumpleitung 21 verbindet den Vakuumraum 10 mit einer Pumpe 23, die kontinuierlich oder zeitlich gesteuert betrieben werden kann, um ein hinreichendes Isoliervakuum im Vakuumraum 10 aufrechtzuerhalten. Dabei ist keine komplexe Ankopplung an den rotierenden Vakuumraum 10 erforderlich, die Pumpleitung 21 und die Pumpe 23 sind feststehend.

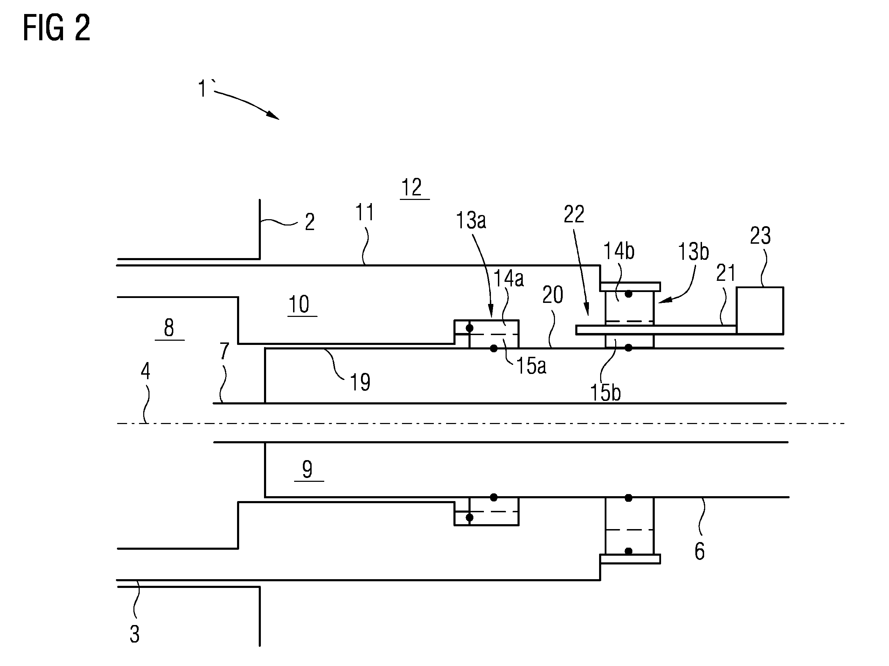

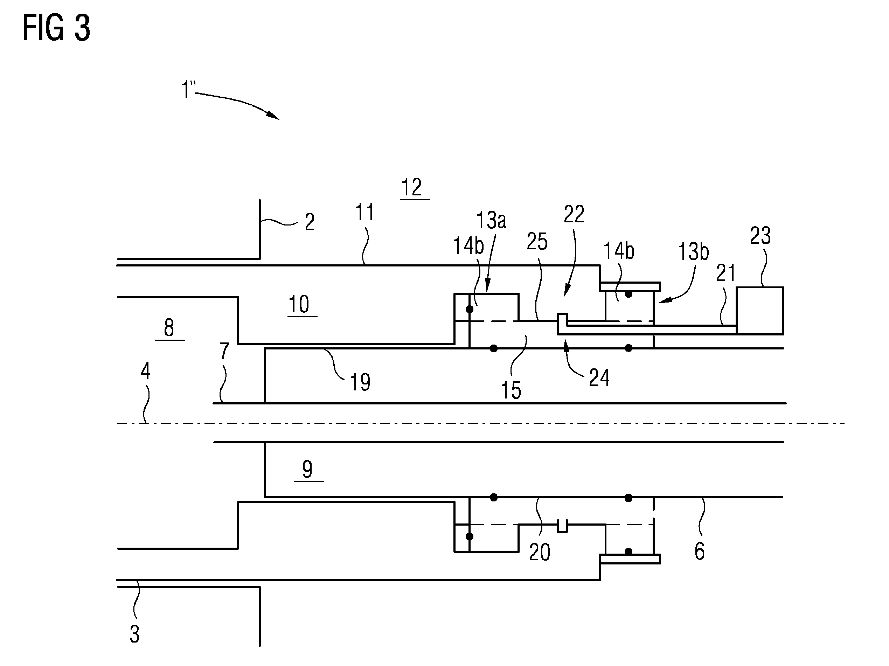

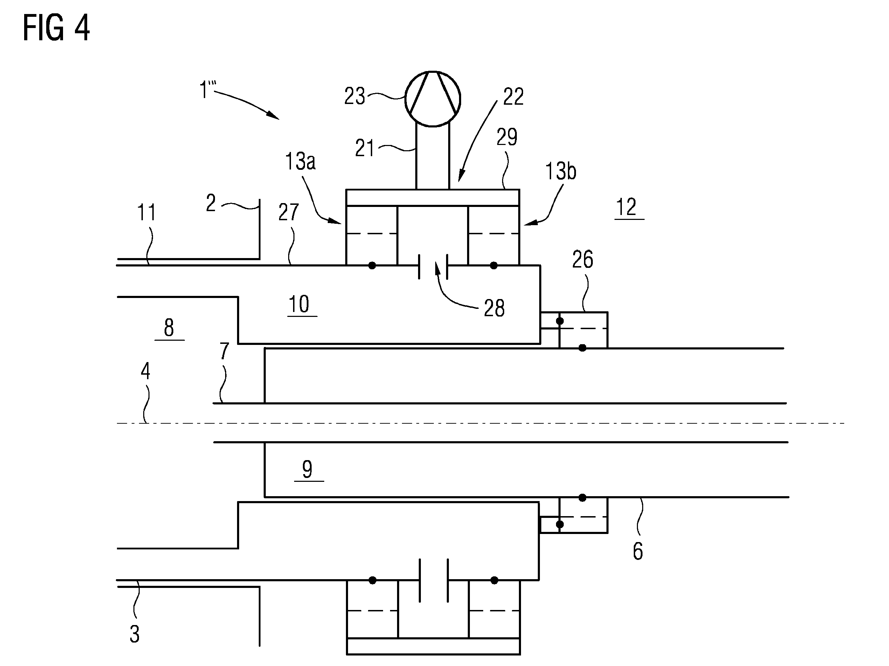

Die Fig. 2 und 3 zeigen nun gegenüber der Fig. 1 modifizierte Ausführungsformen, wobei hier und auch bezüglich der noch zu diskutierenden dritten Ausführungsform gemäß Fig. 4 der Einfachheit halber gleiche Bestandteile mit gleichen Bezugszeichen versehen werden.

Fig. 2 zeigt eine modifizierte Ausführungsform einer Synchronmaschine 1', bei der die Pumpleitung 21 nicht durch das Bauteil 6 geführt ist, sondern durch den ortsfesten Hohlzylinder 15b der Drehdichtung 13b, der entsprechend modifiziert ist. In diesem Fall ist also lediglich eine Veränderung des Hohlzylinders 15b erforderlich, das Bauteil 6 und insbesondere der Wandabschnitt 20 der Außenwand 19 bleiben unverändert. Damit wird eine vereinfachte Konstruktion ermöglicht.
Fig. 3 zeigt eine dritte Ausführungsform einer erfindungsgemäßen Synchronmaschine 1", in der die beiden Drehdichtungen 13a, 13b sowie die Pumpleitung 21 zu einer gemeinsamen Baueinheit 24 zusammengefasst sind. Dabei ist der an der Außenwand 19 des Bauteils 6 befestigte Hohlzylinder 15 letztlich für beide Drehdichtungen 13a, 13b durchgezogen und bildet mit einem Abschnitt 25 eine Begrenzung des Vakuumraums 10, mithin den Anschlussbereich 22, wobei der Abschnitt 25 zwischen den Hohlzylindern 14a und 14b liegt. Auf diese Weise kann die gesamte Anordnung mit den Drehdichtungen 13a, 13b und der Pumpleitung 21 als eine einzige, gemeinsame Baueinheit 24 realisiert werden.

Fig. 4 zeigt eine beispielhafte Synchronmaschine 1'''. Darin ist der Anschlussbereich 22 nicht an dem Bauteil 6, dem Kühlrüssel, vorgesehen, welches durch eine übliche, gegenüber dem Stand der Technik ungeänderte Drehdurchführung 26 geführt ist, sondern es ist eine Anordnung mit Drehdichtungen 13a, 13b an einer Außenwand 27 des Rotors 3 außerhalb des Bereichs des Stators 2 vorgesehen, wobei die Drehdichtungen 13a, 13b, die weiterhin als Ferrofluiddichtungen ausgeführt sind, jeweils benachbart einer Öffnung 28 in der Außenwand 27 angeordnet sind, so dass der Vakuumraum 10 bis in den Bereich einer feststehenden Abdeckung 29 erweitert ist. Dort setzt nun die Pumpleitung 21 mit der Pumpe 23 an.
In diesem Fall dichten also beide Drehdichtungen 13a, 13b gegen den Außenraum 12 ab, der luftgefüllt sein kann, wobei jedoch, wie bereits erwähnt, die erfindungsgemäßen Synchronmaschinen 1, 1', 1'', 1"' besonders vorteilhaft in einer Wasserstoffgasumgebung eingesetzt werden können.

## Patentansprüche

1. Supraleitende Synchronmaschine (1, 1', 1" , 1"'), umfassend einen gegen einen Stator (2) rotierbaren Rotor (3) mit wenigstens einer supraleitenden Wicklung, die über eine Kühleinrichtung (5) gekühlt wird, wobei die gekühlten Bereiche des Rotors (3) wenigstens teilweise durch einen mit dem Rotor (3) rotierenden Vakuumraum (10) umgeben sind, **dadurch gekennzeichnet, dass** in einem mittels wenigstens zweier Drehdichtungen (13a, 13b) erzeugten, relativ zum Rotor (3) feststehenden und den Vakuumraum (10) begrenzenden Anschlussbereich (22) eine den Vakuumraum (10) mit einer Vakuumpumpe (23) verbindende Pumpleitung (21) vorgesehen ist, wobei als Teil der Kühleinrichtung (5) ein feststehender Leitungsabschnitt (7) für ein Kühlmedium in den Rotor (3) hineingeführt ist, welcher feststehende Leitungsabschnitt (7) von einem eine zylindrische Außenwand (19) aufweisenden Bauteil (6) umgeben ist, wobei die axial aufeinander folgenden Drehdichtungen (13a, 13b) derart angeordnet sind, dass ein Teil (20) der feststehenden Außenwand (19) und/oder ein feststehender Anteil (25) einer die beiden Drehdichtungen (13a, 13b) umfassenden Baueinheit (24) eine Begrenzung des Vakuumraums (10) bildet, wobei die Pumpleitung (21 ) durch den feststehenden Anteil einer Drehdichtung (13a,13b) geführt ist und/oder die Pumpleitung (21) durch die Baueinheit (24) geführt ist.

2. Synchronmaschine nach Anspruch 1, **dadurch gekennzeichnet, dass** die Drehdichtung (13a, 13b) eine Ferrofluiddichtung ist.

3. Synchronmaschine nach Anspruch 1 oder 2, **dadurch gekennzeichnet, dass** der Rotor (3) von einem zur Kühlung des Stators (2) vorgesehenen Wasserstoffgas umgeben ist.

4. Synchronmaschine nach einem der vorangehenden Ansprüche, **dadurch gekennzeichnet, dass** eine einen Innenraum (8) des Rotors (3) als Verdampferraum nutzende Kühleinrichtung (5) vorgesehen ist.

## Claims

1. Superconducting synchronous machine (1, 1', 1", 1'''), comprising a rotor (3) which can rotate in relation to a stator (2) and which has at least one superconducting winding, which is cooled via a cooling device (5), wherein the cooled areas of the rotor (3) are surrounded at least partly by a vacuum chamber (10) rotating with the rotor (3), **characterised in that**, in a connection area (22) created by means of at least two rotary seals (13a, 13b), static in relation to the rotor (3) and delimiting the vacuum chamber (10), a pump line (21) connecting the vacuum chamber (10) to a vacuum pump (23) is provided, wherein as part of the cooling device (5), a static line section (7) for a cooling medium is routed into the rotor (3), which static line section (7) is surrounded by a component (6) having a cylindrical external wall (19), wherein the axially consecutive rotary seals (13a, 13b) are arranged such that a part (20) of the static external wall (19) and/or a static portion (25) of a constructional unit (24) comprising the two seals (13a, 13b) forms a delimitation of the vacuum chamber (10), wherein the pump line (21) is routed through the static portion of a rotary seal (13a, 13b) and/or the pump line (21) is routed through the constructional unit (24).

2. Synchronous machine according to claim 1, **characterised in that** the rotary seal (13a, 13b) is a ferrofluid seal.

3. Synchronous machine according to claim 1 or 2, **characterised in that** the rotor (3) is surrounded by a hydrogen gas intended for cooling the stator (2).

4. Synchronous machine according to one of the preceding claims, **characterised in that** a cooling device (5) using an inner space (8) of the rotor (3) as an evaporation chamber is provided.

## Revendications

1. Machine (1, 1', 1", 1"') synchrone supraconductrice, comprenant un rotor ( 3 ) pouvant tourner par rapport à un stator ( 2 ) et ayant au moins un enroulement supraconducteur refroidi par un dispositif ( 5 ) de refroidissement, les parties refroidies du rotor ( 3 ) étant entourées au moins en partie par un espace ( 10 ) sous vide tournant avec le rotor ( 3 ), **caractérisée en ce qu'**il est prévu, dans une partie ( 22 ) de raccordement, produite au moyen d'au moins deux étanchéités (13a, 13b ) en rotation, fixe par rapport au rotor ( 3 ) et délimitant l'espace ( 10 ) sous vide, un conduit ( 21 ) de pompage mettant l'espace ( 10 ) sous vide en communication avec une pompe ( 23 ) à vide, dans laquelle, comme partie du dispositif ( 5 ) de refroidissement, un tronçon ( 7 ) de conduit fixe pour un fluide réfrigérant est introduit dans le rotor ( 3 ), lequel tronçon ( 7 ) de conduit fixe est entouré d'une pièce ( 6 ) ayant une paroi ( 19 ) extérieure cylindrique, les étanchéités ( 13a, 13b ) en rotation se succédant axialement l'une à l'autre étant disposées de manière à ce qu'une partie ( 20 ) de la paroi ( 19 ) extérieure fixe et/ou une proportion ( 25 ) fixe d'une unité ( 24 ) de construction comprenant les deux étanchéités ( 13a, 13b ) en rotation forme(nt) une délimitation de l'espace ( 10 ) sous vide, le conduit ( 21 ) de pompage passant à travers la proportion fixe d'une étanchéité ( 13a, 13b ) en rotation et/ou le conduit ( 21 ) de pompage passant dans l'unité ( 24 ) de construction.

2. Machine synchrone suivant la revendication 1, **caractérisée en ce que** l'étanchéité ( 13a, 13b ) en rotation est une étanchéité ferro-fluidique.

3. Machine synchrone suivant la revendication 1 ou 2, **caractérisée en ce que** le rotor ( 3 ) est entouré d'hydrogène gazeux prévu pour le refroidissement du stator ( 2 ).

4. Machine synchrone suivant l'une des revendications précédentes, **caractérisée en ce qu'**il est prévu un dispositif ( 5 ) de refroidissement utilisant un espace ( 8 ) intérieur du rotor ( 3 ) comme espace d'évaporateur.
